# EUROPEAN PATENT SPECIFICATION

(11) **EP 1 968 242 B1**
(45) Date of publication and mention of the grant of the patent: **23.09.2009**
(21) Application number: 07103267.6
(22) Date of filing: 28.02.2007
(51) Int. Cl.: H04L 12/28, H04W 76/02

(54) **Apparatus and associated method for facilitating communication connection between a mobile station and a communication network**
Vorrichtung und dazugehöriges Verfahren zur Unterstützung der Kommunikationsverbindung zwischen einer Mobilstation und einem Kommunikationsnetzwerk
Appareil, et procédé associé, pour faciliter la connexion de communication entre une station mobile et un réseau de communication

(43) Date of publication of application: 10.09.2008
(73) Proprietor: Research In Motion Limited, Waterloo, Ontario N2L 3W8 (CA)
(72) Inventor: Lim, Miranda Bing Ying, Brossard, Ontario J4X 2N8 (CA); Hanov, Steve Michael, Waterloo, Ontario N2L 2Z7 (CA)
(74) Representative: Fennell, Gareth Charles

(56) References cited:
- US-A1- 2005 153 684
- US-A1- 2005 272 466
- US-A1- 2006 094 427
- 3RD GENERATION PARTNERSHIP PROJECT: "3rd Generation Partnership Project; Technical Specification Group Core Network and Terminals; Numbering, addressing and identification (Release 7) (3GPP TS 23.003 V7.2.0 (2006-12))" INTERNET ARTICLE, [Online] December 2006 (2006-12), pages 1-52, XP002443087 Retrieved from the Internet: URL:http://www.3gpp.org/ftp/Specs/archive/ 23_series/23.003/23003-720.zip> [retrieved on 2007-07-19]

## Description

The present invention relates generally to a manner by which to provide for formation of a communication connection between a mobile station and a communication network in which the communication network is operable pursuant to one of two protocol versions, such as a UMA (Unlicensed Mobile Access) technology or a successor, GAN (Generic Access Network) technology. More particularly, the present invention relates to apparatus according to claim 1, and an associated method according to claim 10, by which to generate signaling messages to permit formation of the communication connection when the communication network operates in conformity with either of the protocol versions.

A network address identifier, or other access message, of a first syntax is first sent. If the message fails to result in a communication connection, then the message, of a second syntax, is sent. A listing is maintained of which of the syntaxes provides for the communication connection. And, the information stored at the listing is subsequently utilized pursuant to subsequent procedures, both pursuant to a current communication session as well as during subsequent communication sessions.

### Background of the Invention

Advancements in communication and processing technologies have permitted the development and deployment of radio communication systems that are permitting of the communication of data at high, and variable, communication rates. For many, ready access to such radio communication systems is an everyday necessity.

Cellular communication systems are exemplary of such radio communication systems, made possible by, and taking advantage of, such advancements. Successive generations of cellular communication systems have been developed and deployed with each new generation providing additional communication capabilities. For instance, early-generation, cellular communication systems primarily provided voice communication services and only limited data services. Successor-generation, cellular communication systems provide for increasingly high-speed data communication services in addition to voice communication services.

Additionally, the advancements in communication and processing technologies is providing for convergence of disparate systems and technologies. For instance, fixed, i.e., wireline, communication systems and services are converging with those of cellular, and other mobile radio, systems and services. Standard-setting bodies have promulgated standardized protocols, for instance, pertaining to cellular/Wi Fi convergence. UMA (Unlicensed Mobile Access) protocols were specified by a UMA technology group. The UMA technology defines, amongst other things, a manner by which to provide GSM/GPRS (Global System for Mobile communications/General Packet Radio Service) communication services by way of a Wi Fi connection to a packet data network. The UMA protocols were subsequently adopted by a 3GPP (3^{rd} Generation Partnership Project) standard-setting body. And, the protocols are renamed therein as GAN (Generic Access Network) protocols. Revisions, and other changes, have since been made to the GAN protocols. In general UMA/GAN functionality is provided through use of a WLAN (Wireless Local Area Network) access point, a fixed-site transceiver with which a UMA/GAN capable, mobile station communicates. The access point is connected to a UMA network controller (UNC) or the like by way of, e.g., a packet data network, such as the internet. The lower logical layers of a UMA/GAN mobile station correspond to the corresponding layers of a GSM network and handoffs are permitted between a GSM base station and a WLAN access point. In both a cellular system and a UMA/GAN system, security procedures are required to be carried out to ensure that a mobile station is authorized to communicate with the cellular or UMA/GAN network.

UMA/GAN protocols define access procedures and signaling, required for a communication connection with a mobile station. While the UMA protocols and GAN protocols exhibit significant commonalities, there also are differences, including differences caused, as above-noted, by subsequent changes to the GAN protocols. Such differences result in various incompatibilities. For instance, a mobile station operable in conformity with UMA protocols is sometimes unable to gain access to, and form a communication connection with, a GAN network. And, vice versa, a GAN-compatible mobile station is unable to gain access to, and form a communication connection with, a UMA network.

US2005153684 relates to a method of connecting user equipment to a communications network via a wireless local area network, the method comprising the steps of a first selecting step for selecting an access point; a second selecting step for selecting a communications network; wherein if said connection fails, sending a message comprising information indicating if said access point supports inter-working with a communications network.

US2005272466 describes a method of selecting a wireless local area network (WLAN) using split user equipment. The method comprises the following steps: a first user equipment obtains relevant network selection parameters from a second user equipment and obtains an undecorated root network access identifier from the second user equipment, the first user equipment performs network discovery and selection, and, upon initiation of final EAP authentication, the first user equipment decorates said network access identifier and transmits it to the WLAN.

US2006094427 describes a scheme for network discovery and selection by a user equipment (UE) device that is operable in wide area cellular network (WACN) bands as well as in wireless access network bands. In particular, the UE device is operable to select a WACN that is accessible via a wireless generic access network (GAN) in addition to being able to access the WACN via the cellular network band.

If, however, a manner could be provided by which to overcome the access incompatibility, and other incompatibilities, a mobile station would be able to communicate by way of a UMA/GAN network, irrespective of its protocol version.

It is in light of this background information related to mobile communication systems that significant improvements of the present invention have evolved.

### Brief Description of the Drawings

Figure 1 illustrates a functional block diagram of a radio communication system in which an embodiment of the present invention is operable.

Figure 2 illustrates a process diagram representative of the process of operation of an embodiment of the present invention.

Figure 3 illustrates a method flow diagram of the method of operation of an embodiment of the present invention.

### Detailed Description

The present invention, accordingly, advantageously provides apparatus, and an associated method, by which to provide for formation of a communication connection between a mobile station and a communication network operable pursuant to one of either of two protocol versions, such as a UMA-network or its successor, a GAN-network, operable in conformity with their respective signaling protocols.

These and other objects are achieved by means of the features of the independent claims. Preferred embodiments are defined in the dependent claims.

Through operation of an embodiment of the present invention, a manner is provided by which to generate signaling messages to permit formation of the communication connection when the communication network operates in conformity with either of the protocol versions.

In one aspect of the present invention, an NAI (Network Access Identifier) or other access message of a first syntax is first sent by the mobile station. If the message fails to result in a communication connection, then the message, of a second syntax, is sent.

In another aspect of the present invention, a listing is maintained of which of the access messages, and their associated syntactical formations, permits the formation of a communication connection. The listing is accessed, and information listed therein, is used during a current, or subsequent communication session. And, contents of the listing are updated, as needed.

In another aspect of the present invention, a network access identifier is provided that generates a network access identifier pursuant to the communication-connection procedures. The syntax of the network access identifier is different in a UMA-compliant system than in a GAN-compliant system. The UMA-compliant syntax of a network access identifier is required to be received by a UMA network for a communication connection with a mobile station. If the UMA network instead receives a GAN-formatted NAI, then the communication connection fails. Analogously, the GAN-compliant syntax of a network access identifier is required to be received by a GAN-compliant network for a communication connection with a mobile station. If a GAN-compliant network instead receives a UMA-formatted network access identifier, than the communication connection also fails.

The network access identifier generator is capable of generating both a network access identifier that includes UMA-compliant syntax and a network access identifier that includes a GAN-compliant syntax.

In another aspect of the present invention, a selected first one of the UMA-formatted network access identifier and GAN-formatted network access identifier is formed and caused to be communicated by the mobile station pursuant to a communication connection procedure. If the network access identifier is accepted, then the communication network is known to be compliant with the protocols corresponding to the syntactical format of the already-sent network access identifier accepted by the network. If, conversely, the communication connection fails, the network access identifier generator forms another network access identifier message that is formatted pursuant to the other of the syntactical formats. And, a communication connection is thereafter formable as, presumptively, the communication network is operable in conformity with the other protocol versions.

Information used to populate parts of the network access identifier is retrieved from a SIM-card (Subscriber Identity Module), or other memory device, embodied at the mobile station.

In another aspect of the present invention, a listing is created and maintained at a memory element of the mobile station. The listing indexes together identities of communication networks and their respective protocol version pursuant to which such associated communication networks are determined to be operable. The listing is populated during operation of the mobile station. The mobile station identifies the communication network, such as by a network identifier broadcast by an element of the communication network. And, when the network access identifier formatted using the syntax of a selected one of the protocol versions is successfully utilized in the formation of a communication connection, the protocol version pursuant to which the communication network is operable is thereby determined. And a field of the listing is populated with the protocol version. The listing is subsequently accessible, thereby to provide an indication of the protocol version pursuant to which the communication network is operable. And, the listing is updateable, as needed.

In another aspect of the present invention, the listing is accessed to determine protocol discriminator values to be used in a discovery request or register request, also generated by the mobile station. The syntactical format of the discovery request and register request is dependent upon the protocol version, i.e., a UMA or GAN, network. Through the determination of the protocol version pursuant to generation of the network access identifier, the correct syntax of the subsequent request messages is immediately available.

Thereby, a manner is provided by which to permit a mobile station to form a communication connection with a communication network of either of the protocol versions, i.e., a UMA-compliant network or a GAN-compliant network.
Incompatibilities that would otherwise prevent a formation of a communication connection are obviated.

In these and other aspects, therefore, apparatus, and an associated method is provided to facilitate formation of a communication connection. An access message generator is configured to generate an access message selectably having first content and second content. The access message is generated to initiate formation of the communication connection. A content reselector is operable responsive to failure of formation of the communication connection responsive to generation by the access message generator of the access message having a first selected one of the first content and the second content. The content reselector is configured to select a second selected one of the first content and the second content and to instruct the access message generator to generate the access message having the second selected one of the first and second content to reattempt initiation of formation of the communication connection.

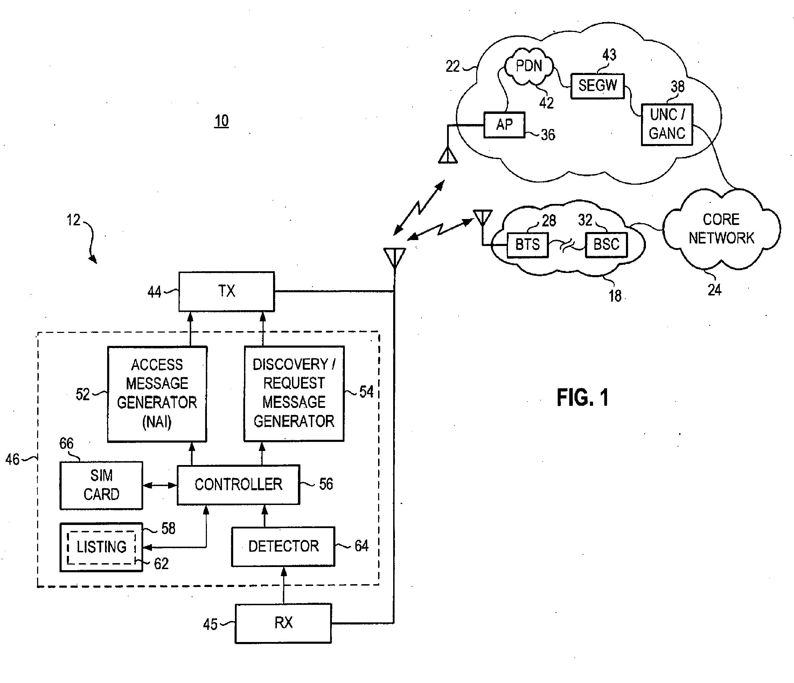

Referring first, therefore, to figure 1, a radio communication system, shown generally at 10, provides for radio communications with mobile stations, of which the mobile station 12 is exemplary. The mobile station 12 here forms a convergent device, capable of operation in a GSM (Global System for Mobile communications) and in a UMA/GAN (Unlicensed Mobile Access/Generic Access Network) system. And, the network part of the communication system is shown to include a GSM network 18, a UMA/GAN network 22, and a core network 24. The UMA/GAN network is representative of a Wi Fi, or other, network operable in conformity with UMA or with GAN protocols. As noted above, the UMA and GAN protocols are, in significant part, different protocol versions of the same fundamental protocol scheme. The protocols differ, however, in manners that would prevent a mobile station from forming a communication connection with the network 22. If signaling generated by the mobile station is in compliance with a protocol version other than the protocol version pursuant to which the network 22 is operable, a convergent mobile station, of conventional construction, would be unable to be permitted to form a communication connection with the network 22. Operation of an embodiment of the present invention provides a manner by which the mobile station operates to provide for the formation of a communication connection irrespective of which of the protocol versions pursuant to which the network 22 is operable.

The GSM network is shown to include a base transceiver station (BTS) 28 and a base station controller (BSC) 32. And, the network 22 is shown to include an access point (AP) 36 and a controller 38, here interconnected by way of an internet connection 42 via a security gateway (SEGW) 43.

In conventional manner, communications are carried out between the mobile station and the base transceiver station of the GSM network. Hand off of communications is permitted between base transceiver stations of the GSM network and, additionally, between the network 18 and the network 22. The mobile station 12 includes transceiver circuitry, here represented by a transmit (TX) part 44 and a receive (RX) part 45. The transceiver circuitry provides for communications with both the GSM network and with the UMA/GAN network 22.

The mobile station further includes apparatus 46 of an embodiment of the present invention that facilitates formation of a communication connection between the mobile station and the network 22 when the network is either of the UMA protocol version or the GAN protocol version. In contrast to existing convergent mobile stations otherwise capable of forming a communication connection with a UMA protocol version or, alternately, a GAN-protocol version network, the mobile station 12 including the apparatus 46 permits connection of the mobile station with the network 22 irrespective of which of two protocol versions pursuant to which the network operates. The apparatus 46 is functionally represented, implementable in any desired manner, including, for instance, algorithms executable by processing circuitry.

The apparatus is here shown to include an access message generator 52, a discovery and register request generator 54, a controller 56, a memory element 58 at which a listing 62 is maintained, a detector 64, and a SIM (Subscriber Identity Module) card 66, or other memory location.

In operation, an NAI (Network Access Identifier) forming an access message is first caused to be generated and transmitted by the transmit part of the mobile station. The network access identifier is one of either of two syntactical formats, a UMA-compliant format or a GAN-compliant format. If the NAI is of a syntactical format that corresponds to the protocol version of the network 22, then the NAI signaling procedure shall succeed. Conversely, if the NAI is of a syntactical format that differs with the protocol version of the network 22, then the signaling fails. In the event of failure of a first attempt using a network access identifier of a first format, then the NAI is, e.g., regenerated and transmitted, formed of the other of the syntactical formats. Three types of control are generally provided in UMA/GAN: provisioning, default, and serving. When communicating to a provisioning or a default UNC/GANC, the NAI is formed based upon information stored on the device at the time of manufacture, pertaining to a particular carrier. In this scheme, if the NAI is refused, no retry of an NAI with a different format is attempted. However, when communicating with a serving UNC/GANC, it is possible that the protocol versions of the two carrier networks are different. In this scheme, a retry with an NAI of a new format is attempted. The controller 56 controls operation of the access message generator, first to cause the access message generator to access the listing 62 of the memory element 58 to determine if the listing identifies the communication network with which the mobile station is to attempt to communicate is of a UMA protocol version or of a GAN protocol version. If the listing includes an identification, then the NAI caused to be generated by the access message generator is of a format corresponding to that accessed in the listing. Otherwise, if the listing does not provide such an indication, then the network access identifier is randomly arbitrarily selected or selected otherwise in a manner without knowledge of the protocol version pursuant to which the network 22 is operable. Additionally, in the formation of the network access identifier, contents stored at the SIM card 66 are accessed, and values stored thereat are used to populate fields of the network access identifier.

When the network access identifier uses the UMA-format, the network access identifier forms a string of the form:
"1 < IMSI >@uma.mnc<MNC>.mcc<MCC>.3gppnetwork.org".
The values of the IMSI (International Mobile Subscriber Identity), the MNC (Mobile Network Code), and MCC (Mobile Country Code) are retrieved from the SIM card 66. Additional details related to this NAI are found, e.g., in the document, UMA Stage 3 r1.0.4 Section 5.2.1. Analogously, when the network access identifier conforms with the GAN format, the network access identifier is a string of the form:
"1 < IMSI >@gan.mnc<MNC>.mcc<MCC>.3gppnetwork.org".
Additional details related to this NAI are found, e.g., in 3GPP Document 23.003 Section 17.2.1.

The network access identifier, of whichsoever syntax, is communicated to a security gateway and detected by the security gateway thereof. The security gateway analyzes the contents of the message pursuant to IPSec authentication procedures. If the network access identifier is of a syntactical format that differs with the format defined by the protocol version pursuant to which the security gateway is compatible, then the authentication fails or times out, and the communication connection of the mobile station with the network is denied. Conversely, if the syntactical format of the message corresponds with that of the protocol version pursuant to which the network is operable, then the communication connection is permitted.

Indications are returned to the mobile station, received at the receive part 45, and detections thereof are made by the detector 64. In the event that the communication connection is permitted, indications are provided to the memory element 58 and the protocol version of the communication network is recorded, indexed against the identity of the network. By recording the protocol version of the communication network, in subsequent signaling, and subsequent communication connection attempts, a guess, or arbitrary selection, of the syntactical format by which to form a subsequent NAI, or other message, need not be made. Instead, the contents of the listing are accessed, and the identity of the protocol version of the network is immediately ascertained.

For instance, the different protocol versions of the network 22 further differ in the format of discovery request and register request messages. Each of these messages includes a 4-bit PD value. Details related to the PD value are set forth, e.g., in 3GPP document 44.318 section 11.1.1.2 and UMA Stage 3 R1.0.3 section 11.1.1.2.

When utilizing the UMA protocol version, the PD value is of a value of 1. However, using a GAN protocol version, the PD value is 0. According to further operation of an embodiment of the present invention, the discovery and request message generator 54 is further caused to form the respective messages in conformity with the protocol version of the network with which the mobile station forms a communication connection. A discovery message and a register request message are generated subsequent to successful communication of the network access identifier and storage at the listing of the protocol version of the communication network. When a discovery or register request message is to be generated, access is made of the listing, such as by operation of the controller 56 to access the contents and to provide the access contents to the message generator 54. Responsive to knowledge of the protocol version pursuant to which the communication network is compliant, the PD value of the message formed by the message generator 54 is appropriately populated. That is to say, if the listing indicates the communication network to be a UMA-compliant network, then the PD value of the message formed by the message generator 54 is of a value of 1. And, if the communication network is identified to be a GAN-compliant network, then the PD is populated with a value of 0. When the discovery or request message is formatted in conformity with the protocol version pursuant to which the communication network is compliant, then the message, when sent by the transmit part of the mobile station, is accepted and operated upon. That is to say, depending upon which NAI was successful, the mobile station configures itself to use either the GAN or UMA PD value in all further signaling to the network and its controller 38.

The listing 62 formed at the memory element 58. Wheresoever embodied, however, the listing forms a table identifying which of a UMA/NAI, or a GAN/NAI worked with a network with which a communication connection was attempted. Movement permitted of the mobile station permits a listing of multiple entries to be formed and maintained, accessible at any time in which a network access identifier, discovery message, request message, or other message that is protocol-version specific is to be generated. By forming, and subsequently accessing, the table, delays associated with use of an erroneous access identifier and subsequent lack of access granted by a security gateway need not occur. And, upon successful connection to a security gateway, the protocol version of the communication network is updated to record which of the network access identifier formats worked successfully. In future connections to the same communication network, the table formed of the listing indicates which network access identifier to use first. In one implementation, the table is indexed by the IP address of the secured gateway of the network. In other embodiments, indexing is provided in other manners, such as by the MNC/MCC (Mobile Network Code/Mobile Country Code), or similar identifier, of the communication network forming the target network.

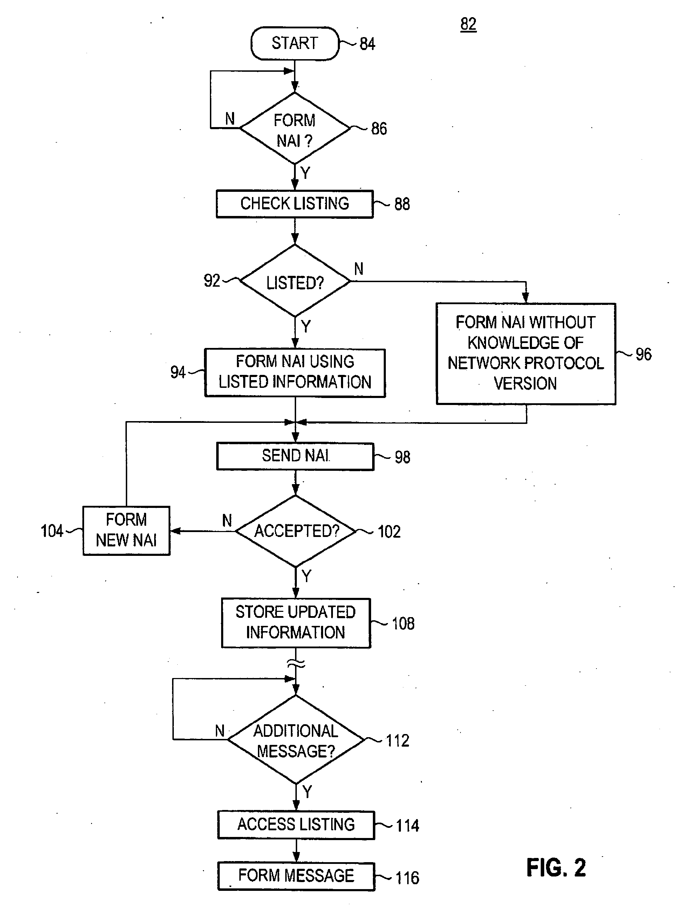

Turning next to Figure 2, a process diagram, shown generally at 82, represents the process of operation of an embodiment of the present invention. The process here pertains to operation with respect to a serving UNC/GANC scheme. The process starts at the start block 84. Then, a determination is made, as indicated at the decision block 86, as to whether a network access identifier (NAI) is to be formed. If not, the no branch is taken back to the decision block. Otherwise, the yes branch is taken to the block 88.

At the block 88, the contents of a listing forming a table indexing together communication networks and their associated protocol versions are accessed. A determination is made at the decision block 92 as to whether the protocol version of the network with which communications are to proceed is listed. If the network and its protocol version are listed, the yes branch is taken to the block 94. If not contained in the listing, the no branch is taken to the block 96. At the block 94, the network access identifier is formed using the information retrieved from the listing. Conversely, at the block 96, the network access identifier is formed without knowledge of the protocol version of the communication network. Paths are then taken to the block 98, and the network access identifier is sent to the communication network.

A determination is made at the decision block 102, as to whether the network access identifier is accepted. If not, the no branch is taken to the block 104, and a new access identifier is formed. In the exemplary implementation in which the communication network is of one of two protocol versions, a UMA-compliant version, and a GAN-compliant version, the NAI formed at the block 104 is of a format that is the remaining one, not previously formed. A path is taken back to the block 98, and the newly-formed access identifier is sent.

If the network access identifier is determined at the decision block 102 to be accepted, the yes branch is taken to the block 108. At the block 108, the protocol version associated with the accepted network access identifier is stored, if not already stored, at the listing of the memory element. A path is then taken to the decision block 112 at which a determination is made as to whether an additional message, such as a discovery request message or a register request message is to be generated. If not, the no branch is taken back to the decision block. Otherwise, if a subsequent message is to be generated, the yes branch is taken to the block 114, and the listing is accessed to obtain the protocol version of the communication network to which the subsequent message is to be sent. The accessed, protocol version is used at the block 116 to form the subsequent message.

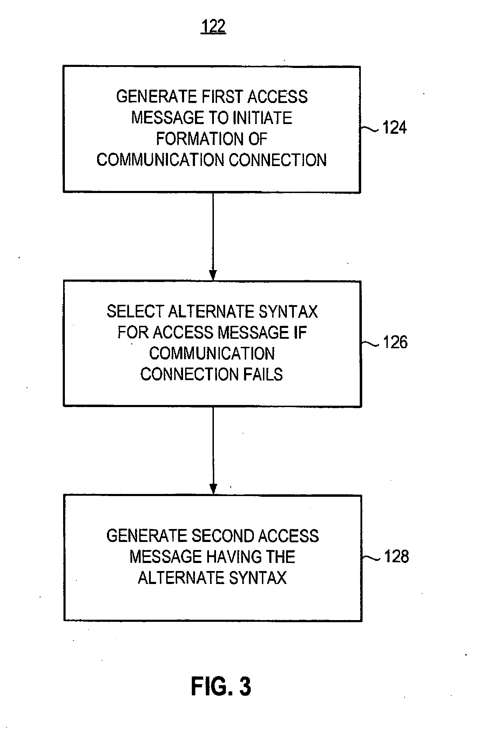

Figure 3 illustrates a method flow diagram, shown generally at 122, representative of the method of operation of an embodiment of the present invention. The method facilitates formation of a communication connection by a mobile station.

First, and as indicated by the block 124, an access message is generated. The access message selectably has a first selected one of first content and second content. The access message is used to initiate formation of the communication connection. Then, and as indicated by the block 126, a second selected one of the first content and the second content is selected responsive to failure of formation of the communication connection subsequent to generation of the first access message. Then, and as indicated by the block 128, the access message having the second selected one of the first and second content is generated to reattempt, thereby initiation of formation of the communication connection.

Thereby, a mobile station generates an access message permitting a communication connection to be formed with a communication network that is either UMA-compliant or GAN-compliant. Communication failure resulting from lack of compatibility between the mobile station and the communication network does not result. Additionally, due to the storage of the protocol version of the communication network, a network access identifier is formable to be of a syntactical format that permits the formation of a communication connection with little delay.

## Claims

1. Apparatus (46) for a mobile station (12) to facilitate formation of a communication connection with a network, the mobile station (12) operable to communicate according to a first and a second, different communication protocol, said apparatus comprising:
a memory element (58) adapted to store a listing (62) of network identifiers associated with previously-successful communication connections by the mobile station (12) and the protocol used in making each previous connection;
an access message generator (52) configured to generate an access message selectably having a first content or a second content after accessing the listing (62) to determine if a protocol associated with a network identifier is listed there, the access message generated to initiate formation of the communication connection with the network corresponding to the network identifier; and
a content reselector operable responsive to failure of formation of the communication connection to instruct said access message generator (52) to generate the access message having the second content to reattempt initiation of formation of the communication connection, the second content formed according to the alternate one of the first and second communication protocol.

2. The apparatus (46) of claim 1 wherein the access message generated by said access message generator (52) comprises a Network Access Identifier.

3. The apparatus (46) of claim 1 wherein the first content of the access message generated by said access message generator comprises a UMA, Unlicensed Mobile Access, syntax string.

4. The apparatus (46) of claim 1 wherein the second content of the access message generated by said access message generator comprises a GAN, Generic Access Network, syntax string.

5. The apparatus of claim 1 wherein the second content is different from the first content.

6. The apparatus (46) of claim 1 further comprising a connection success determiner configured to determine success of the formation of the communication connection responsive to the access message generation.

7. The apparatus of claim 1 wherein the memory element (58) is configured to identify which of the first content and the second content contained in the access message results in success of the formation of the communication connection.

8. The apparatus of claim 1 wherein the first content selectably contained in the access message generated by said access message generator is associated with a UMA (Unlicensed Mobile Access)-compliant network protocol and wherein the second content is associated with a GAN (Generic Access Network)-compliant network protocol.

9. The apparatus of claim 6 wherein said connection success determiner is configured to update the listing maintained at said memory element responsive to successful formation of the communication connection.

10. A method for facilitating formation of a communication connection with a network by a mobile station operable to communicate according to a first and a second, different communication protocol, said method comprising the operations of:
accessing a table stored in a memory of the mobile station, the table listing networks previously-connected with by the mobile station and the protocol used in making each previous connection;
generating a first access message having a first content to initiate formation of the communication connection, the first content being formed according to a protocol associated with the network if the network is found in the table;
determining whether the communication connection is formed;
responsive to failure of formation of the communication connection subsequent to generation of said first access message, generating a second access message having a second content to reattempt initiation of formation of the communication connection, the second content formed according to the alternate one of the first and second communication protocol.

11. The method of claim 10 further comprising the operation of recording in the table the protocol, if any, used to form a successful access message associated with the network.

12. The method of claim 10 wherein the second content is different from the first content.

13. The method of claim 10 further comprising determining whether an additional message is to be generated.

14. The method of claim 10 wherein the access message generated during said operation of generating the access message comprises an NAI (Network Access Indicator).

## Patentansprüche

1. Vorrichtung (46) für eine mobile Station (12), um eine Bildung einer Kommunikationsverbindung mit einem Netzwerk zu erleichtern, wobei die mobile Station (12) betriebsfähig ist, gemäß einem ersten und einem zweiten, unterschiedlichen, Kommunikationsprotokoll zu kommunizieren, wobei die Vorrichtung aufweist:
ein Speicherelement (58), das ausgebildet ist, ein Verzeichnis (62) von Netzwerkidentifizierern, die zu früher erfolgreichen Kommunikationsverbindungen durch die mobile Station (12) gehören, und das Protokoll zu speichern, das bei der Herstellung jeder früheren Verbindung verwendet wurde;
ein Zugriffsnachrichtengenerator (52), der konfiguriert ist, eine Zugriffsnachricht zu erzeugen, die wählbar einen ersten Inhalt oder einen ° zweiten Inhalt hat, nach einem Zugreifen auf das Verzeichnis (62), um zu bestimmen, ob ein Protokoll, das zu einem Netzwerkidentifizierer gehört, dort aufgeführt ist, wobei die Zugriffsnachricht erzeugt wird, um eine Bildung der Kommunikationsverbindung mit dem Netzwerk zu initiieren, die dem Netzwerkidentifizierer entspricht; und
einen Inhalt-Neu-Auswähler, der betriebsfähig ist, als Reaktion auf ein Fehlschlagen einer Bildung der Kommunikationsverbindung, den Zugriffsnachrichtengenerator (52) anzuweisen, die Zugriffsnachricht mit dem zweiten Inhalt zu erzeugen, um erneut eine Initiierung einer Bildung der Kommunikationsverbindung zu versuchen, wobei der zweite Inhalt gebildet wird gemäß dem alternierenden der ersten und zweiten Kommunikationsprotokolle.

2. Vorrichtung (46) gemäß Anspruch 1, wobei die Zugriffsnachricht, die durch den Zugriffsnachrichtengenerator (52) erzeugt wird, einen Netzwerkzugriffsidentifizierer (Network Access Identifier) aufweist.

3. Vorrichtung (46) gemäß Anspruch 1, wobei der erste Inhalt der Zugriffsnachricht, die durch den Zugriffsnachrichtengenerator erzeugt wird, einen UMA(Unlicensed Mobile Access)-Syntaxstring aufweist.

4. Vorrichtung (46) gemäß Anspruch 1, wobei der zweite Inhalt der Zugriffsnachricht, die durch den Zugriffsnachrichtengenerator erzeugt wird, einen GAN(Generic Access Network)-Syntaxstring aufweist.

5. Vorrichtung gemäß Anspruch 1, wobei der zweite Inhalt von dem ersten Inhalt verschieden ist.

6. Vorrichtung (46) gemäß Anspruch 1, die weiter einen Vebindungserfolg-Bestimmer aufweist, der konfiguriert ist, einen Erfolg der Bildung der Kommunikationsverbindung zu bestimmen als Reaktion auf die Erzeugung der Zugriffsnachricht.

7. Vorrichtung gemäß Anspruch 1, wobei das Speicherelement (58) konfiguriert ist, zu identifizieren, welcher des ersten Inhalts und des zweiten Inhalts, der in der Zugriffsnachricht enthalten ist, zu einem Erfolg bei der Bildung der Kommunikationsverbindungführt.

8. Vorrichtung gemäß Anspruch 1, wobei der erste Inhalt, der wählbar in der Zugriffsnachricht enthalten ist, die durch den Zugriffsnachrichtengenerator erzeugt wird, zu einem UMA(Unlicensed Mobile Access)-konformen Netzwerkprotokoll gehört und wobei der zweite Inhalt zu einem GAN(Generic Access Network)-konformen Netzwerkprotokoll gehört.

9. Vorrichtung gemäß Anspruch 6, wobei der Verbindungserfolg-Bestimmer konfiguriert ist, das Verzeichnis, das an dem Speicherelement geführt wird, als Reaktion auf eine erfolgreiche Bildung der Kommunikationsverbindung zu aktualisieren.

10. Verfahren zur Erleichterung einer Bildung einer Kommunikationsverbindung mit einem Netzwerk durch eine mobile Station, die betriebsfähig ist, gemäß einem ersten und einem zweiten, unterschiedlichen, Kommunikationsprotokoll zu kommunizieren, wobei das Verfahren die Operationen aufweist:
Zugreifen auf eine Tabelle, die in einem Speicher der mobilen Station gespeichert ist, wobei die Tabelle Netzwerke, die früher mit der mobilen Station verbunden waren, und das Protokoll aufführt, das bei der Herstellung jeder früheren Verbindung verwendet wurde;
Erzeugen einer ersten Zugriffsnachricht mit einem ersten Inhalt, um eine Bildung der Kommunikationsverbindung zu initiieren, wobei der erste Inhalt gebildet wird gemäß einem Protokoll, das zu dem Netzwerk gehört, wenn das Netzwerk in der Tabelle zu finden ist;
Bestimmen, ob die Kommunikationsverbindung gebildet ist;
als Reaktion auf ein Fehlschlagen der Bildung der Kommunikationsverbindung nachfolgend auf eine Erzeugung der ersten Zugriffsnachricht, Erzeugen einer zweiten Zugriffsnachricht mit einem zweiten Inhalt, um erneut eine Initiierung einer Bildung der Kommunikationsverbindung zu versuchen, wobei der zweite Inhalt gebildet wird gemäß dem alternierenden der ersten und zweiten Kommunikationsprotokolle.

11. Verfahren gemäß Anspruch 10, das weiter aufweist die Operation eines Aufzeichnens des Protokolls, wenn vorhanden, in der Tabelle, das verwendet wird, um eine erfolgreiche Zugriffsnachricht zu bilden, die zu dem Netzwerk gehört.

12. Verfahren gemäß Anspruch 10, wobei der zweite Inhalt von dem ersten Inhalt verschieden ist.

13. Verfahren gemäß Anspruch 10, das weiter aufweist Bestimmen, ob eine zweite Nachricht zu erzeugen ist.

14. Verfahren gemäß Anspruch 10, wobei die Zugriffsnachricht, die während der Operation eines Erzeugens der Zugriffsnachricht erzeugt wird, einen Netzwerkzugriffsidentifizierer bzw. NAI (Network Access Indicator) aufweist.

## Revendications

1. Dispositif (46) pour un poste mobile (12) pour faciliter la formation d'une connexion de communication à l'aide d'un réseau, le poste mobile (12) étant utilisable pour communiquer sous des premier et second protocoles différents de communication, ledit dispositif comprenant :
un élément (58) de mémoire apte à mémoriser une liste (62) d'identificateurs de réseau associés à des connexions de communication antérieurement réussies par le poste mobile (12) et le protocole utilisé dans la réalisation de chaque connexion antérieure ;
un générateur (52) de message d'accès constitué pour engendrer un message d'accès ayant au choix un premier contenu ou un second contenu après accès à la liste (62) pour déterminer si un protocole associé à un identificateur de réseau se trouve dans la liste, le message d'accès étant engendré pour lancer la formation de la connexion de communication à l'aide du réseau correspondant à l'identificateur de réseau ; et
un resélecteur de contenu utilisable en réponse à une défaillance de formation de la connexion de communication pour ordonner audit générateur (52) de message d'accès d'engendrer le message d'accès ayant le second contenu pour tenter à nouveau le lancement de la formation de la connexion de communication, le second contenu étant formé selon l'autre des premier et second protocoles de communication.

2. Dispositif (46) selon la revendication 1, dans lequel le message d'accès engendré par ledit générateur (52) de message d'accès comprend un identificateur d'accès au réseau.

3. Dispositif (46) selon la revendication 1, dans lequel le premier contenu du message d'accès engendré par ledit générateur de message d'accès comprend une chaîne de syntaxe d'accès mobile sans licence (UMA pour "Unlicensed Mobile Access").

4. Dispositif (46) selon la revendication 1, dans lequel le second contenu du message d'accès engendré par ledit générateur de message d'accès comprend une chaîne de syntaxe de réseau à accès générique (GAN pour "Generic Access Network").

5. Dispositif selon la revendication 1, dans lequel le second contenu est différent du contenu de la liste.

6. Dispositif (46) selon la revendication 1, comprenant en outre un déterminateur de réussite de connexion constitué pour déterminer la réussite de la formation de la connexion de communication en réponse à la génération de message d'accès.

7. Dispositif selon la revendication 1, dans lequel l'élément (58) de mémoire est constitué pour identifier lequel du premier contenu et du second contenu, contenu dans le message d'accès, a pour résultat la réussite de la formation de la connexion de communication.

8. Dispositif selon la revendication 1, dans lequel le premier contenu, contenu à la suite du choix dans le message d'accès engendré par ledit générateur de message d'accès, est associé à un protocole de réseau compatible avec l'UMA (l'accès mobile sans licence) et dans lequel le second contenu est associé à un protocole de réseau compatible avec le GAN (le réseau à accès générique).

9. Dispositif selon la revendication 6, dans lequel ledit déterminateur de réussite de connexion est constitué pour mettre à jour la liste entretenue au niveau dudit élément de mémoire en réponse à la formation réussie de la connexion de communication.

10. Procédé pour faciliter la formation d'une connexion de communication à l'aide d'un réseau par un poste mobile utilisable pour communiquer sous des premier et second protocoles différents de communication, ledit procédé comprenant les opérations consistant :
à accéder à une table mémorisée dans une mémoire du poste mobile, la table énumérant des réseaux antérieurement connectés au poste mobile et le protocole utilisé dans chaque connexion antérieure ;
à engendrer un premier message d'accès ayant un premier contenu pour lancer la formation de la connexion de communication, le premier contenu étant formé selon un protocole associé au réseau si le réseau a été trouvé dans la table ;
à déterminer si la connexion de communication a été formée ;
en réponse à une défaillance de formation de la connexion de communication à la suite de la génération dudit premier message d'accès, à engendrer un second message d'accès ayant un second contenu pour tenter à nouveau le lancement de la formation de la connexion de communication, le second contenu étant formé selon l'autre des premier et second protocoles de communication.

11. Procédé selon la revendication de 10, comprenant en outre l'opération consistant à enregistrer dans la table le protocole, s'il y en a un, utilisé pour former un message d'accès ayant réussi, associé au réseau.

12. Procédé selon la revendication de 10, dans lequel le second contenu est différent du premier contenu.

13. Procédé selon la revendication de 10, comprenant en outre la détermination de ce qu'un message additionnel doit, ou non, être engendré.

14. Procédé selon la revendication de 10, dans lequel le message d'accès engendré pendant ladite opération consistant à engendrer le message d'accès comprend un indicateur d'accès au réseau (NAI pour " Network Access Indicator").
